(19) **Europäisches Patentamt / European Patent Office / Office européen des brevets**

(11) **EP 3 675 031 B1**

(12) **EUROPEAN PATENT SPECIFICATION**

(45) Date of publication and mention of the grant of the patent:
**19.11.2025 Bulletin 2025/47**

(21) Application number: **19214490.5**

(22) Date of filing: **09.12.2019**

(51) International Patent Classification (IPC):
***G06T 5/50*** *(2006.01)*

(52) Cooperative Patent Classification (CPC):
**G06T 5/50;** G06T 2207/20221

(54) **IMAGE PROCESSING APPARATUS AND METHOD**

BILDVERARBEITUNGSVORRICHTUNG UND -VERFAHREN

APPAREIL ET PROCÉDÉ DE TRAITEMENT D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2018 CN 201811654748**

(43) Date of publication of application:
**01.07.2020 Bulletin 2020/27**

(73) Proprietor: **Nuctech Company Limited Beijing 100084 (CN)**

(72) Inventors:
- **ZHAO, Ziran**
  BEIJING, 100084 (CN)
- **GU, Jianping**
  BEIJING, 100084 (CN)
- **LIU, Peng**
  BEIJING, 100084 (CN)
- **YUAN, Shaoming**
  BEIJING, 100084 (CN)
- **ZHOU, Zhiqiang**
  BEIJING, 100084 (CN)
- **LIU, Kuo**
  BEIJING, 100084 (CN)
- **GENG, Xingjie**
  BEIJING, 100084 (CN)

(74) Representative: **Cabinet Beau de Loménie 103, rue de Grenelle 75340 Paris Cedex 07 (FR)**

(56) References cited:
**US-A1- 2002 015 536**

- T. MAY ET AL: "Safe VISITOR: visible, infrared, and terahertz object recognition for security screening application", PROCEEDINGS OF SPIE, vol. 7309, 28 April 2009 (2009-04-28), 1000 20th St. Bellingham WA 98225-6705 USA, pages 73090E, XP055662049, ISSN: 0277-786X, ISBN: 978-1-5106-2687-4, DOI: 10.1117/12.818524
- FAY D ET AL: "Realtime Image Fusion and Target Learning & Detection on a Laptop Attached Processor", INFORMATION FUSION, 2005 7TH INTERNATIONAL CONFERENCE ON PHILADELPHIA, PA, USA 25-28 JULY 2005, PISCATAWAY, NJ, USA,IEEE, vol. 1, 25 July 2005 (2005-07-25), pages 499 - 506, XP010892332, ISBN: 978-0-7803-9286-1, DOI: 10.1109/ICIF.2005.1591896
- JINSONG ZHANG ET AL: "Terahertz Image Detection with the Improved Faster Region-Based Convolutional Neural Network", SENSORS, vol. 18, no. 7, 18 July 2018 (2018-07-18), pages 2327, XP055662357, DOI: 10.3390/s18072327
- THOMAS W ROGERS ET AL: "Automated X-ray Image Analysis for Cargo Security: Critical Review and Future Promise", ARXIV.ORG, CORNELL UNIVERSITY LIBRARY, 201 OLIN LIBRARY CORNELL UNIVERSITY ITHACA, NY 14853, 3 August 2016 (2016-08-03), XP080717884
- TANUSHRI CHAKRAVORTY ET AL: "Automatic Image Registration in Infrared-Visible Videos using Polygon Vertices", 17 March 2014 (2014-03-17), XP055662604, Retrieved from the Internet <URL:https://www.etsmtl.ca/ETS/media/ImagesETS/Labo/LIVIA/Publications/2014/1403.4232v1.pdf> [retrieved on 20200128]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present application relates to the field of image identification, and in particular, to an apparatus and method for performing multi-level fusion on images obtained in different light/radiation bands for implementing accurate identification.

### BACKGROUND

In recent years, terahertz/millimeter wave imaging technology has attracted much attention and demonstrated specific development potential in the field of human security inspection. The terahertz/millimeter wave has good penetrability, which can be used to detect items hidden in clothes and can enable high-resolution imaging of body surface in real time. Items concerned by security inspection, such as drugs, explosive products, etc., have characteristic spectrums in the terahertz/millimeter wave band. Further, passive terahertz/millimeter wave does not actively radiate electromagnetic waves outwardly, thus does not cause Ionization damage to the inspected human and operators. Based on these advantages, terahertz/millimeter wave imaging technology has gradually become the mainstream technology for human security.

However, due to limitations of wavelength and hardware process conditions, these two technologies have the following disadvantages: limited penetration capability, large image noise, low image definition, limited image identification capability, and inability to identify materials. Therefore, it is difficult for the terahertz/millimeter wave imaging technology to accurately identify all kinds of contraband goods carried around, such as sweating in human body resulting in low image definition, belts resulting in image for the waist breakages and false alarms, gaps between peoples resulting in false alarms, and unidentifiability of certain objects (such as, guns) and suspect materials, and the like.

Since infrared imaging technology, visible light imaging technology and other technologies are relatively mature, clear images of high-resolution can be obtained. The present application makes full use of relatively mature technologies such as infrared imaging technology and visible light imaging technology to compensate for the disadvantages of the terahertz/millimeter wave imaging technology, thereby improving the imaging quality and solving the problem that suspect items cannot be accurately identified.

The document titled "Safe Visitor: Visible, Infrared and Terahertz Object recognition for security screening application" by T. May, et al., which is part of the proceedings of the SPIE conference in 2009, is related art to the invention. The document introduces fusion of a terahertz image with a visible image and an infrared image to clearly identify objects underneath clothes.

## SUMMARY

One of the objects of the present application is to provide a solution for the above problems such as large image noise, image blurring, low identification accuracy, and inability to identify the material of an inspected item caused by the terahertz/millimeter wave technology.

The invention is defined by an image processing method according to claim 1, an image processing apparatus according to claim 11, another image processing apparatus according to claim 12 and a non-transitory computer-readable medium according to claim 13. Further embodiments are defined by the dependent claims.

In a first aspect of the disclosure, the object is achieved by an image processing apparatus according to claim 11.

The first light/radiation band is a terahertz/millimeter wave band, the first image is a terahertz/millimeter wave image, one of the at least two light/radiation bands is a visible light band, the other of the at least two light/radiation bands is an infrared light band, and the at least two images are a visible light image and an infrared image, respectively.

The image processing apparatus may further comprise: an image enhancement processing module configured to perform image enhancement on the first image to obtain a enhanced first image, and wherein the image registration module and the image fusion module may operate based on the enhanced first image.

The image processing apparatus may further comprise: a background noise filtering module configured to filter out background noises in the first image using a background noise filtering method, wherein the image fusion module operates based on the filtered first image.

The background noise filtering module may be further configured to apply median filtering, bilateral filtering, linear stretching and directional gradient histogram (HOG) algorithm on the filtered first image.

The background noise filtering module may be further configured to detect portions within a maximum circumscribed rectangle of the object to filter out background noises in the first image.

The background noise filtering module may be further configured to detect portions within a contour of the object to filter out background noises in the first image.

The image registration module may be further configured to perform image registration based on registration parameters.

The registration parameters are variable, and an average of the registration parameters during a period of registration is calculated when the registration parameters change during the period of registration, and the average is used as a new registration parameter for the next registration.

The one of the at least two images that is lastly fused is a color image, and a fusion method corresponding to the lastly fused image of the at least one fusion method is a fusion method for retaining color information.

The image identification module may be further configured to: identify a region having a smaller gray value from the fused images; segment image of the object in the multi-level fused image to determine a position of a feature; calculate a distance between the region having the smaller gray value and the position of the feature, and a length of the region having the smaller gray value; wherein the region having the smaller gray value is not considered as dangerous or contraband goods when the distance is less than a first threshold and the length is greater than a second threshold, and the region having the smaller gray value is considered as dangerous or contraband goods when the distance is greater than the first threshold and the length is less than the second threshold.

The image identification module may be further configured to: acquire a large number of images as a set of samples, train the multi-level fused image using a deep learning method to obtain weight values of different dangerous or contraband goods, and obtain a trained model.

The image identification module may be further configured to train the multi-level fused image by a YOLO3 algorithm using a multi-layer region-based convolutional neural network RCNN.

A plurality of immediately adjacent objects may be divided into a plurality of individual objects when the plurality of immediately adjacent objects are included in the multi-level fused image, and a suspect item in each of the individual objects is identified using the image identification method.

The image processing apparatus may further comprise a material identification module configured to identify material of the item carried by the object using a multi-spectral material classifier.

The multi-spectral material classifier may be obtained by: imaging known contraband goods being of different types and different thicknesses in the first band and the at least two light/radiation bands to obtain multi-dimensional calibration data; and training the the multi-dimensional calibration data to obtain the multi-spectral material classifier.

The multi-spectral material classifier may be trained online for continuous updating.

In a second aspect of the disclosure, the object is achieved by an image processing method according to claim 1.

The first light/radiation band is a terahertz/millimeter wave band, the first image is a terahertz/millimeter wave image, one of the at least two light/radiation bands is a visible light band, the other of the at least two light/radiation bands is an infrared light band, and the at least two images are a visible light image and an infrared image, respectively.

The image processing method may further comprise: performing image enhancement processing on the first image to obtain a enhanced first image, wherein the image registration and multi-level fusion are performed based on the enhanced first image.

The image processing method may further comprise: filtering out background noises in the first image using a background noise filtering method, wherein the multi-level fusion are performed based on the filtered first image.

The filtered first image, after filtering out the background noises and before performing the multi-level fusion on the image, is applied median filtering, bilateral filtering, linear stretching and directional gradient histogram (HOG) algorithm.

The background noise filtering method may detect portions within a maximum circumscribed rectangle of the object.

The background noise filtering method may detect portions within a contour of the object.

The step of performing the image registration may further comprise performing image registration based on registration parameters.

The registration parameters are variable, and an average of the registration parameters during a period of registration is calculated when the registration parameters change during the period of registration, and the average is used as a new registration parameter for the next registration.

The one of the at least two images that is lastly fused is a color image, and a fusion method corresponding to the lastly fused image of the at least one fusion method is a fusion method for retaining color information.

The image identification method may comprise: identifying a region having a smaller gray value from the multi-level fused image; segmenting image of the object in the multi-level fused image to determine a position of a feature; calculating a distance between the region having the smaller gray value and the position of the feature, and a length of the region having the smaller gray value; wherein the region having the smaller gray value is not considered as dangerous or contraband goods when the distance is less than a first threshold and the length is greater than a second threshold, and the region having the smaller gray value is considered as dangerous or contraband goods when the distance is greater than the first threshold and the length is less than the second threshold.

The image identification method may comprise: acquiring a large number of images as a set of samples; training the multi-level fused image using a deep learning method to obtain weight values of different dangerous or contraband goods; and obtain a trained model.

The deep learning method may be implemented by a YOLO3 algorithm using a multi-layer region-based convolutional neural network RCNN.

A plurality of immediately adjacent objects are divided into a plurality of individual objects when the plurality of immediately adjacent objects are included in the multi-level fused image, and a suspect item in each of the individual objects is identified using the image identification method.

The image processing method may further comprise: identifying material of the item carried by the object using a multi-spectral material classifier.

The multi-spectral material classifier may be obtained by: imaging known contraband goods being of different types and different thicknesses in the first band and the at least two light/radiation bands to obtain multi-dimensional calibration data; and training the the multi-dimensional calibration data to obtain the multi-spectral material classifier.

The multi-spectral material classifier may be trained online for continuous updating.

In a third aspect of the disclosure, the object is achieved by another image processing apparatus according to claim 12.

The disclosure obtains an image containing information of different dimensions of a scene by using multi-device image registration, fusion, and super-resolution reconstruction, thereby improving image quality. Further, category and material of an item can be accurately identified by using smart identification method and material identification method, thereby improving quality of security inspection.

## BRIEF DESCRIPTION OF DRAWINGS

The above and other embodiments and features of the present disclosure will become more apparent from the detailed description of the embodiments with reference to the accompanying drawings, in which:

FIG. 1 illustrates a block diagram of a multi-modal fusion system in accordance with an embodiment of the present application;

FIG. 2 illustrates a generalized flowchart of a multi-modal fusion process in accordance with an embodiment of the present application;

FIG. 3 illustrates a block diagram of a registration module in a image processing apparatus of FIG. 1 in accordance with an embodiment of the present application;

FIG. 4 illustrates an example flowchart of an image registration process in accordance with an embodiment of the present application;

FIG. 5 illustrates registration diagrams between a terahertz/millimeter wave image and a visible light image and an infrared image in accordance with an embodiment of the present application;

FIG. 6a illustrates a diagram of a first embodiment of background noise filtering implemented by using a rectangle as a mask in accordance with an embodiment of the present application;

FIG. 6b illustrates a diagram of a second embodiment of background noise filtering implemented by using a contour as a mask in accordance with an embodiment of the present application;

FIG. 7 illustrates a flowchart of process for filtering out background noises in accordance with an embodiment of the present application;

FIG. 8 illustrates a flowchart of process for performing post-processing on the filtered image in FIG. 6a or 6b in accordance with an embodiment of the present application;

FIG. 9 illustrates a flowchart of process for multi-modal image fusion in accordance with an embodiment of the present application;

FIG. 10 illustrates a block diagram of a multi-modal identification system formed by the multi-modal fusion system in accordance with an embodiment of the present application;

FIG. 11a is a flowchart showing multi-modal intelligent identification process implemented using a first method in accordance with an embodiment of the present application;

FIG. 11b is a flowchart showing multi-modal intelligent identification process implemented using a second method in accordance with an embodiment of the present application;

FIG. 12 illustrates a flowchart of a multi-modal material identification method in accordance with an embodiment of the present application; and

FIG. 13 illustrates a schematic diagram of a multi-modal image processing apparatus in accordance with an embodiment of the present application.

## DETAILED DESCRIPTION

Exemplary embodiments of the disclosure are described in detail with reference to the accompanying drawings, and the disclosure is not limited to the exemplary embodiments described below. In order to clearly describe the basic idea of the disclosure, only components, functions or steps closely related to the technical solution of the disclosure are shown in the drawings, and detailed descriptions of known techniques, functions, components or steps are omitted in the following description. The terms such as "system", "module", "device", "unit", as used herein, are only used for the purpose of description and are not intended to be limiting.

Currently, only terahertz/millimeter wave imaging technology is used for security inspection for human body. Based on this, the inventors propose to combine the technologies of terahertz/millimeter wave imaging and visible light imaging, infrared imaging, etc., fuse images obtained by using multiple imaging technologies to obtain images having higher definition, and perform multi-modal identification on a suspect item based on the obtained images of higher definition, thereby increasing the probability for accurately identifying the suspect item. Further, machine learning is performed based on data of several conventional suspect materials to accurately identify the suspect materials.

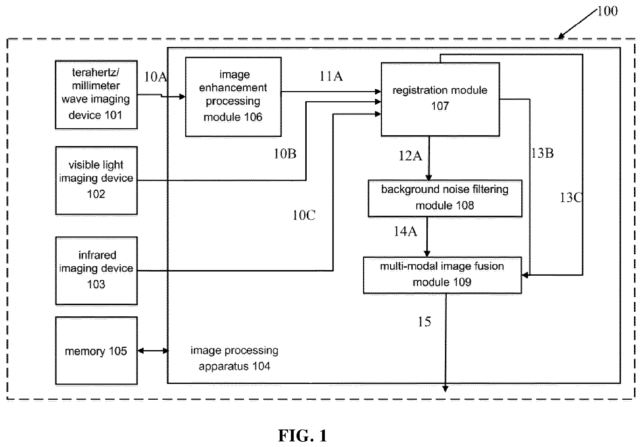

FIG. 1 illustrates a generalized block diagram of the multi-modal fusion system 100 in accordance with an embodiment of the present application. Only parts closely related to the technical solution of the disclosure are shown in this figure. It can be understood by those skilled in the art that other parts may be included in addition to the parts shown. In order to clarity and not obscure the disclosure, these parts are not shown in the drawings, and their descriptions are also omitted.

As shown in FIG. 1, the multi-modal fusion system 100 may include a terahertz/millimeter wave imaging device 101, a visible light imaging device 102, an infrared imaging device 103, an image processing apparatus 104, and a memory 105.

For the purpose of clarity and ease of illustration, in addition to the terahertz/millimeter wave imaging device, only two further imaging devices (102 and 103) are shown in the figure, but the disclosure is not limited thereto. More imaging devices may be included, and these imaging devices may use the same or different imaging technologies.

The terahertz/millimeter wave imaging device 101, the visible light imaging device 102 and the infrared imaging device 103 may be configured to be at the same angle of view, respectively, such that images 10A, 10B, and 10C for the same scene may be obtained respectively when the same object is imaged. The terahertz/-millimeter wave imaging device 101, the visible light imaging device 102 and the infrared imaging device 103 may send the images 10A, 10B, and 10C to the image processing apparatus 104 in wired (for example, cable or universal serial bus (USB)) or wireless (for example, Wi-Fi, Bluetooth (BT)) manner, respectively.

The image processing apparatus 104 may include an image enhancement processing module 106, a registration module 107, a background noise filtering module 108, and a multi-modal image fusion module 109. The image processing apparatus 104 may be configured to receive the images 10A, 10B, and 10C from the terahertz/millimeter wave imaging device 101, the visible light imaging device 102, and the infrared imaging device 103, respectively, so as to perform pre-processing and multi-modal fusion processing on the images 10A, 10B, and 10C before image fusion. The pre-processing includes enhancing image visual effect processing, registration processing (i.e., image alignment processing), and background noise filtering processing.

The memory 105 may be configured to store data and instructions, and the like, which are genegrated during the processing of the image processing apparatus 104.

The image enhancement processing module 106 may be configured to receive the image 10A from the terahertz/millimeter wave imaging device 101, and then enhance a visual effect of the image 10A to generate an terahertz/millimeter wave image 11A having an increased image defitinition. In an example, enhancing the visual effect of the image may include, for example, one or more of brightness adjustment, contrast adjustment, gamma correction, pre-denoising, and the like.

Since these imaging devices, i.e., the terahertz/millimeter wave imaging device 101, the visible light imaging device 102 and the infrared imaging device 103, have different sensors, imaging mechanisms, imaging times, conditions, and accurate angles, there are certain geometric deviations (e.g., translation, scaling, rotation and the like) among the images obtained by the imaging devices 101, 102 and 103. Therefore, before the fusion of the images obtained by the respective devices, it is firstly necessary to register the images obtained using different imaging modes. Image fusion, image division and image identification are based on the image registration.

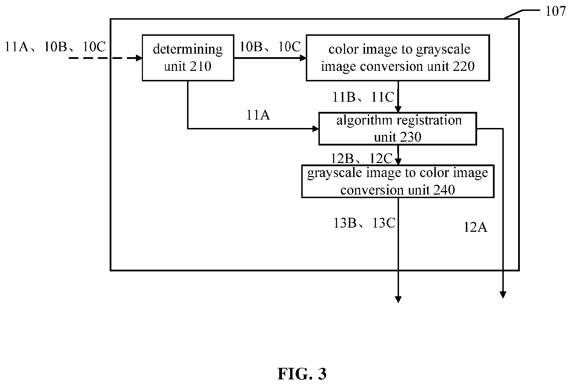

The registration module 107 may be configured to perform image registration on each of the images. A detailed description of the registration module 107 and its detailed operations will be described with reference to FIGS. 3 to 5.

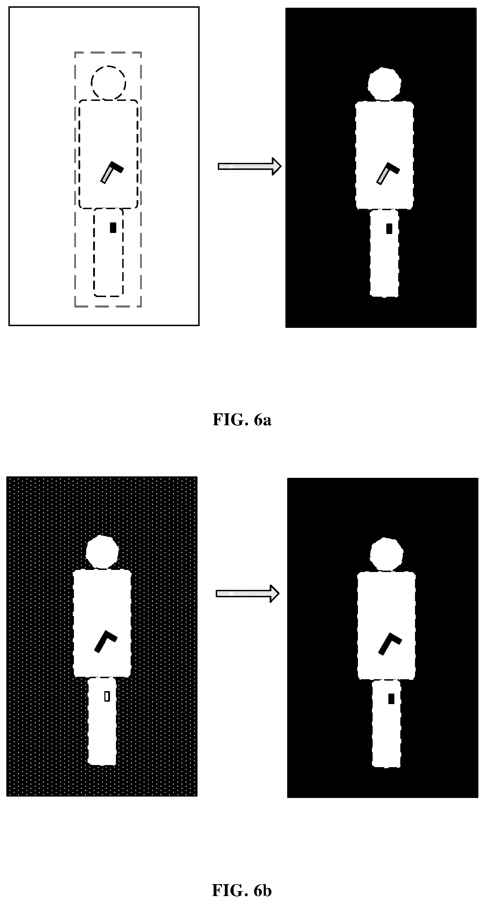

The background noise filtering module 108 may be configured to filter out background noises in the terahertz/millimeter wave image. A detailed description of the background noise filtering module 108 and its detailed operations will be described with reference to FIGS. 6a and 6b.

The multi-modal image fusion module 109 may be configured to perform a first-level fusion on the filtered terahertz/millimeter wave image and the registered infrared image, and then perform a second-level fusion on the fused image and the registered visible light image, such that a final fused image 15 is obtained.

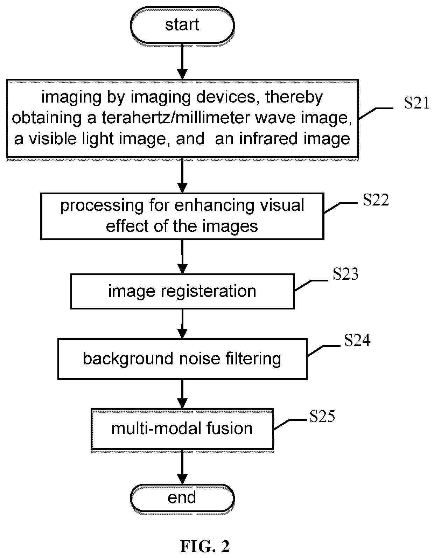

FIG. 2 illustrates a generalized flowchart of the multi-modal fusion process in accordance with an embodiment of the present application.

In step S21, the terahertz/millimeter wave imaging device 101, the visible light imaging device 102, and the infrared imaging device 103 generate the images 10A, 10B, and 10C for the same scene, respectively.

In step S22, visual effect of the image 10A generated in step S21 is enhanced.

In step S23, the image enhanced in step S22 is registred with the visible light image 10B and the infrared image 10C generated in step S21 to obtain a registered terahertz/millimeter wave image, a registered visible light image and a registered infrared image.

In step S24, the background noises of the registered terahertz/millimeter wave image obtained in step S23 are filtered out.

In step S25, the filtered terahertz/millimeter wave image is multi-modally fused with the registered visible light image and infrared image obtained in step S23.

The following is described with respect to the respective modules and detailed operations thereof.

FIG. 3 illustrates a block diagram of the registration module 107 in the image processing apparatus 104 in accordance with an embodiment of the present application.

As shown, the registration module 107 may include a determining unit 210, a color image to grayscale image conversion unit 220, an algorithm registration unit 230 and a grayscale image to color image conversion unit 240.

The determining unit 210 may be configured to receive the terahertz/millimeter wave image 11A from the image enhancement processing module 106; receive the visible light image 10B and the infrared image 10C from the visible light imaging device 102 and the infrared imaging device 103, respectively; and determine whether there is an image of a specific object (for example, a human) in the terahertz/millimeter wave image 11A, the visible light image 10B, and the infrared image 10C. If there is no specific object in the images, the registration module 107 does not perform the subsequent registration operations. If there is a specific object in the images, the registration module 107 performs the subsequent registration operations.

The color image to grayscale image conversion unit 220 may be configured to receive the visible light image 10B and the infrared image 10C being color images from the determining unit 210, convert them into visible light image 11B and infrared images 11C being grayscale images, respectively, and then send the grayscale images (i.e., the visible light image 11B and the infrared image 11C) to the algorithm registration unit 230.

The algorithm registration unit 230 may be configured to receive the visible light image 11B and the infrared image 11C from the color image to grayscale image conversion unit 220, receive the terahertz/millimeter wave image 11A from the determining unit 210; perform feature detection on regions having obvious features (such as a contour of a human image, an article worn/dressed/carried on a human body) in the terahertz/millimeter wave image 11A, the grayscale visible light image 11B, and the grayscale infrared image 11C by using a Harris or SURF algorithm to generate feature correspondences; perform geometrical transformation (for example, translation, scaling, rotation and the like) on the grayscale visible light image 11B and the grayscale infrared image 11C according to the generated feature correspondences based on the terahertz/millimeter wave image 11A, such that these images 11A, 11B and 11C are registered in the same coordinate system, thereby generating registered terahertz/millimeter wave image 12A, visible light image 12B, and infrared image 12C.

Image registration is process for spatially aligning two or more images taken from different devices or at different times, and aims to find a optimal transformation required for alignment, such that after the optimal transformation, the geometric deviations (e.g., translation, scaling, rotation and the like) are eliminated, and the images are finally aligned with each other in the meaning of geometric position.

A mapping relationship between images for registration can be mathematically expressed as follows. It is assumed that an image to be registered and a reference image are denoted by two-dimensional matrixs $I_1$ and $I_2$, respectively, gray values of the image to be registered and reference image at a point (x, y) are denoted by $I_1(x, y)$ and $I_2(x, y)$, respectively, the mapping relationship between the images for registration may be shown as:

$$I_2(x,y) = g(I_1(f(x,y))) \qquad (1)$$

wherein f denotes a coordinate transformation in a two-dimensional space; g is a one-dimensional function representing grayscale change of an imaging device due to different imaging conditions.

The basic framework of image registration may include four aspects: feature space, search space, search strategy and similarity measurement:

(1) Feature space: After image division or grayscale transformation, an image will generally contain some features. These features are used for image registration, which may be, for example, feature points, feature lines, image contour, or gray values of image pixels.

(2) Search space: There is a transformation range or manner between images when the image registration is performed. The transformation range may be global, local, and displacement field-dependent. Commonly used transformation manners between images are translation, scaling, rotation, and the like.

(3) Similarity measurement: In the registration process, it is necessary to evaluate a quality of each transformation. The similarity measurement is used to evaluate the quality of the transformation. The similarity measurement changes as the feature space changes. The value of the similarity measurement will directly determine which registration transformation to choose and whether the image is correctly registered under the currently applied transformation model..

(4) Search strategy: When searching for the optimal transformation parameters of the image to be registered and the reference image, the parameters may be searched by using a certain optimization algorithm. The optimization algorithm may be regarded as the search strategy. When using the optimization algorithm to perform geometric optimal search of the parameters, the optimal search may be performed according to the value of the similarity measurement.

Image registration algorithms may be classfied into two categories, i.e., grayscale-based algorithms and feature-based algorithms. The feature-based image registration algorithms involve, for the images obtained, extracting common features between the images, such as corner points, line features, edge information, and finding the mapping relationship between images for achieving image matching. The grayscale-based image registration algorithms involve: directly using gray value information of the entire images; selecting the corresponding transformation model; and obtaining the optimal transformation parameters based on a certain search algorithm.

In image registration, either or both of the two registration algorithms may be used without limitation.

In an embodiment, the feature-based registration algorithm is exemplarily used.

The terahertz/millimeter wave has good penetrability, which is capable of imaging items hidden in clothes of a human when imaging the human. The infrared and visible light imaging technologies may only image the human and items externally worn by the human. Therefore, when the human does not wear/carry any exposed items, the feature extraction can be performed based on a contour of a human image. When the human wears/carries some exposed items, features of the items may be extracted in addition to the contour of the human image, so as to effectively improve registration accuracy.

The grayscale image to color image conversion unit 240 may be configured to convert the registered visible light image 12B and infrared image 12C from grayscale images into color images 13B and 13C.

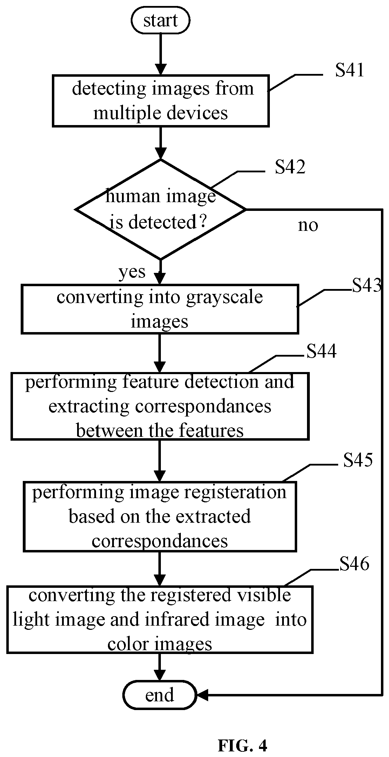

FIG. 4 illustrates an example flowchart of the image registration process in accordance with an embodiment. Various steps in the image registration process shown in FIG. 4 may be regarded as further detailed description of step S23 in FIG. 2.

In step S41, the images from multiple devices (such as, the visible light image and the infrared image disclosed herein) may be detected.

In step S42, it is determined whether there is an image of a specific object (such as, a human) in the images from multiple devices.

If it is determined that there is no image of a specific object in the images from multiple devices ("no" in step S42), the entire process ends. If it is determined that there is image of a specific object ("yes" in step S42), the process proceeds to step S43.

In step S43, the images from the multiple devices being color images are converted into grayscale images to perform feature-based registration processing on the converted grayscale images.

In step S44, feature detection is performed on regions having obvious features in the images converted in step S43, and the feature correspondences between the detected features are extracted.

Then, in step S45, according to the extracted feature correspondences, the converted visible light image and infrared image are scaled, rotated, translated, and the like based on the terahertz/millimeter wave image, such that the terahertz/millimeter wave image and the converted visible light image and infrared image are registered, thereby allowing complete coincide of the regions having obvious features of the terahertz/millimeter wave image, the visible light image, and the infrared image. After step S45, the process proceeds to step S46.

In step S46, the grayscale visible light image and infrared image are converted back to color images, thereby retaining color information of the original visible light image and infrared image (such as, 10B and 10C).

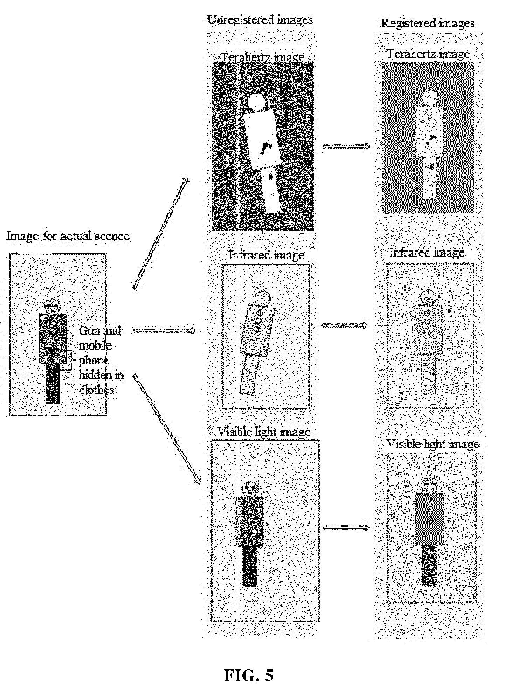

FIG. 5 illustrates diagrams before and after registration between an example terahertz/millimeter wave image and an example visible lightimage and an example infrared image in accordance with an embodiment of the present application. As can be seen from FIG. 5, before registration, a size of the grayscale visible light image 11B is greater than a size of the terahertz/millimeter wave image 11A, and the human image therein is on the left side of the overall image; and a size of the grayscale infrared image 11C is less than the size of the terahertz/millimeter wave image 11A, and the human image therein is on the left side of the overall image and leans to right. After registration, the sizes of the registered terahertz/millimeter wave image 12A, visible light image 12B, and infrared image 12C are consistent, and the human image in theses images are centered and not tilted.

In image registration, the image registration may be performed periodically instead of frame by frame. A period of registration may be adjusted as appropriate, which may be, for example, 10 minutes, 20 minutes, 30 minutes, 1 hour, 5 hours, 10 hours, etc. The duration of each registration may also be configurable, for example to 1 minute, 3 minutes, 5 minutes, 10 minutes, etc. In registration, the registration parameters are related to an angle of an imaging device and a distance between the imaging device and the human body. If the imaging device does not move, the registration parameters will remain fixed. If the imaging device moves, the registration parameters will vary. When the registration parameters vary, the registration module 106 calculates an average of the registration parameters and stores the average in the memory 105 as registration parameter for the next registration. The registration parameters are cyclically updated in such a manner, such that the registration accuracy may be constantly improved.

Referring back to FIG. 1, after the image registration by the registration module 107, the registration module 107 may be configured to transmit the registered terahertz/millimeter wave image 12A to the background noise filtering module 108, where the background noises of the registered terahertz/millimeter wave image 12A is filtered out by using a background noise filtering technology, so as to obtain a filtered terahertz/millimeter wave image 13A. By filtering out the background noises in the terahertz/millimeter wave image 12A, a situation where the quality of background of the fused images is less than that of the visible light image or the infrared image due to the background noises in the terahertz/millimeter wave image 12A may be avoided in the image fusion.

In an example, the background noise filtering technology may be a foreground detection technology or a background detection technology.

When the foreground detection technology is used, in the visible light image 13B, the maximum circumscribed rectangle of the region of the human image may be detected by YoLo3 algorithm, and then the rectangle is used as a mask to perform a first logical operation with the registered terahertz/millimeter wave image 12A, thereby filtering out the noises outside the rectangle in the terahertz/millimeter wave image 12A. Alternatively, in the infrared image 13C, edge extraction is performed using Canny operator to obtain the contour of the human image, and then the contour is used as the mask to perform the first logic operation with the registered terahertz/millimeter wave image 12A, thereby filtering out the noises outside the contour of the terahertz/millimeter wave image 12A. When the background detection technology is used, in the visible light image 13B or the infrared image 13C, the background region is obtained by using a background modeling algorithm such as mixed Gaussian, Vibe, etc., and then the background region is used as the mask to perform a second logical operation with the registered terahertz/millimeter wave image 12A, thereby filtering out the background region in the terahertz/millimeter wave image 12A. After the background noises are filtered out, the terahertz/millimeter wave image 13A only contains the human image.

FIG. 6a illustrates a diagram of a first embodiment of background noise filtering implemented by using the rectangle as the mask in accordance with an embodiment of the present application. FIG. 6b illustrates a diagram of a second embodiment of background noise filtering implemented by using the contour as another mask in accordance with an embodiment of the present application. In FIGS. 6a and 6b, white points in the images, before the noises are filtered out, represent noises, and it can be seen that, after the noises are filtered out, the noises represented by the white points in the images are significantly reduced or even completely disappeared.

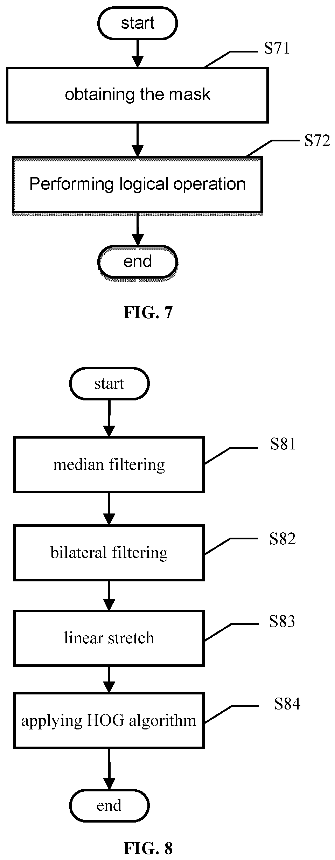

FIG. 7 illustrates a flowchart of process for filtering out background noises in accordance with an embodiment of the present application. This flowchart is detailed description of step S24 in FIG. 2.

In step S71, the mask is obtained by using the foreground detection technology or the background detection technology.

In step S72, the logical operation is performed on the mask and the terahertz/millimeter wave image to filter out the background noises in the terahertz/millimeter wave image.

After the background noises are filtered out, the background noise filtering module 108 may be further configured to perform post-processing on the filtered terahertz/millimeter wave image 13A.

FIG. 8 illustrates a flowchart of process for performing post-processing on the filtered images in FIG. 6a or 6b in accordance with an embodiment of the present application.

In step S81, median filtering is performed on the terahertz/millimeter wave image 13A to filter out salt-pepper noises.

In step S82, bilateral filtering is performed on the filtered terahertz/millimeter wave image obtained in step S81, in which the salt-pepper noises are filtered out.

In step S83, linear stretch is performed on the filtered terahertz/millimeter wave image obtained in step S82, which has been subjected to bilateral filtering, so as to improve contrast between the human image, an image of a suspect item carried by the human and a residual background.

Finally, in step S84, contour information of the human image and the image of the suspect item is enhanced using a directional gradient histogram HOG operator to produce a terahertz/millimeter wave image 14A.

The multi-modal image fusion module 109 can be configured to: receive the terahertz/millimeter wave image 14A from the background noise filtering module 108 and receive the visible light image 13B and the infrared image 13C from the registration module 107, respectively; perform image fusion on the infrared image 13C and the terahertz/millimeter wave image 14A by using a first fusion method to obtain a fused image of first-level, which includes both of the information of the suspect item and a clear human contour; and then perform another image fusion on the fused image of first-level and the visible light image 13B by using a second fusion method, to fuse the color information in the visible light image into the fused image of first-level to form the final fused image 15.

Fusion model can be a high-pass filter (HPF) model, a wavelet transformation model, an algebraic model, a Brovey transformation (BT) model, a principal component analysis (PCA) fusion model, a chroma-intensity-saturation (HIS) model, and a multi-channel color component model, etc.

• Wavelet transformation model

The wavelet transformation model first decomposes each of the images to obtain multiple subdivided components (for example, $3L+1$ bands in the case of classical wavelet decomposition algorithm, where L is the number of decomposed layers; or multi-scale edge images in the case of redundancy-based wavelet decomposition algorithm), then fuse the subdivided components in terms of wavelet coefficients based on a certain fusion rule, and obtain the final fused image by using a reconstruction algorithm.

• PCA fusion model

PCA fusion model is a linear transformation, and the image fusion performed using the PCA fusion model may be regarded as an image compression (that is, two images are fused (or compressed) into one image). The algorithm of the PCA fusion model may be briefly described as follows:

Each of various images may be regarded as a random variable. In image fusion, the eigenvalues and eigenvectors of covariance matrices of the random variables are firstly calculated. Then, the eigenvectors are arranged in a descending order in terms of sizes of the corresponding eigenvalues to obtain a transformation matrix, whch is used to perform transformation on the images. Then, the image fusion is performed on the first several images based on the purpose of application and requirements.

• Multi-channel color component model

The multi-channel color component model may be classified into pseudo-color fusion model and true-color fusion model. The pseudo-color fusion method is widely used for multi-image fusion. The simplest way of the pseudo-color fusion method is to designate one color (color channel component) to each of multiple images, respectively. For example, when a RGB visible light image and an infrared imag are fused, the infrared image data may be designated as red, red components in the visible light image may be designated as green, and a linear combination of the original green and blue components may be designated as blue (or blue is discarded). A fused image obtained in this manner is pseudo-colored, which does not conform to human's visual habit. That is, hue of the fused image is inconsistent with that of an actual item.

One of objectives of the true-color fusion method is to enable the fused image to conform to human's visual habit. That is, the hue of such fused image is substantially consistent with that of an actual item.

• HIS model

The HIS model is based on a fact that hue and saturation may reflect information in the color image and may eliminate an influence of an intensity component on the image. Intensity of light is a feeling of human to brightness when the light acts on eyes of the human. Overall brightness of pixels may be determined in proportion to reflectivity of an object. Hue and saturation are collectively referred to as chroma, which reflects color information. The hue reflects a category of a color, and the saturation reflects the degree of depth (density) in which colorized light exhibits the color.

The first fusion method may be any fusion technology, and the second fusion method is fusion technology capable of retaining color information.

In an embodiment, although the first fusion method may be the wavelet transformation model, and the second fusion method may be a HIS fusion model. The first fusion method and the second fusion method described herein are not limited thereto, and the first fusion method may be the same as or different from the second fusion method.

Without limitation, when a plurality of imaging devices are included in the multi-mode fusion system, the above-described fusion process may be repeated until the last one of the plurality of images obtained by the plurality of imaging devices is fused.

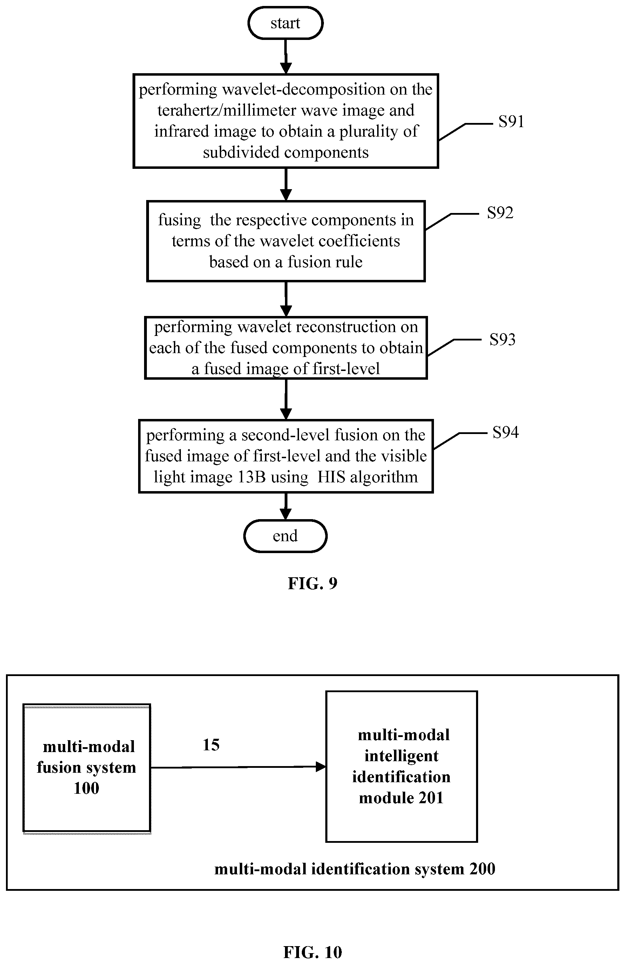

FIG. 9 illustrates a flowchart of process for multi-modal image fusion in accordance with an embodiment of the present application. This flowchart is detailed description of step S25 in FIG. 2.

In step S91, wavelet decomposition is performed on the terahertz/millimeter wave image 14A and the infrared image 13C using wavelet transformation to obtain a plurality of subdivided components.

In step S92, the respective components subdivided in step S91 are fused in terms of wavelet coefficients based on a certain fusion rule.

In step S93, wavelet reconstruction is performed on each of the fused components to obtain a fused image of first-level.

In step S94, the second-level fusion is performed on the fused image of first-level and the visible light image 13B using the HIS algorithm. At this point, the fusion process ends.

The fused image obtained by the multi-modal fusion system is not affected by the background noises in the terahertz/millimeter wave image, and image definition is significantly improved, which provides a reliable guarantee for identification of a suspect item.

FIG. 10 illustrates a block diagram of a multi-modal identification system 200 formed by the multi-modal fusion system 100 in accordance with an embodiment of the present application.

As shown, in addition to the multi-modal fusion system 100, the multi-modal identification system 200 may include a multi-modal intelligent identification module 201. The multi-modal intelligent identification module 201 may be configured to intelligently identify the fused image generated by the multi-modal fusion system 100, so as to accurately determine whether the suspect item in the fused image is dangerous or contraband goods.

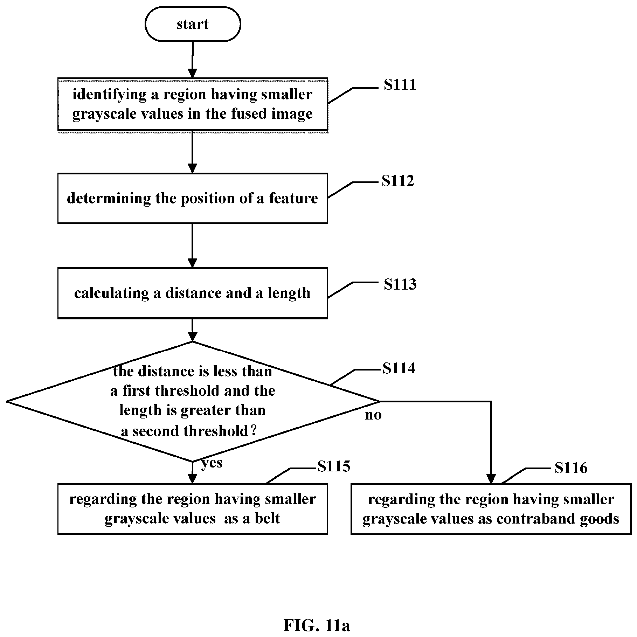

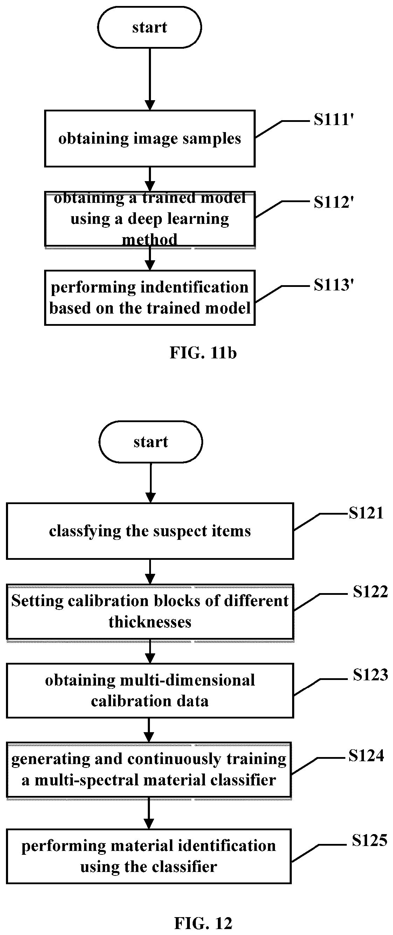

FIG. 11a is a flowchart showing multi-modal intelligent identification process implemented using a first identification method in accordance with an embodiment of the present application. FIG. 11b is a flowchart showing multi-modal intelligent identification process implemented using a second identification method in accordance with an embodiment of the present application.

With reference to FIGS. 11a and 11b, the first and second identification methods used for intelligent identification may be described as follows:

• The first identification method

In step S111 of FIG. 11a, the fused image of first-level and/or the final fused image are identified by an identification algorithm to identify a region having smaller gray value.

In step S112, the human body is divided into an upper portion and a lower portion by using a directional gradient histogram HOG algorithm and a statistical region fusion SRM algorithm, such that position of a feature, i.e., waist line, may be determined.

In step S113, a distance between the region having smaller gray value and the position of the feature (such as, the waist line) and a length of the region having smaller gray value may be calculated.

In step S114, if the distance is less than a first threshold and the length is greater than a second threshold, the process proceeds to step S115, and the region having smaller gray value may be considered as a belt rather than dangerous or contraband goods. If the distance is greater than the first threshold and the length is less than the second threshold, the process proceeds to step S116, and the region having smaller gray value may be considered as dangerous or contraband goods.

In an example, the first threshold and the second threshold may be configured by the multi-modal intelligent identification module 201 as needed.

According to such a concept, similar zoning, mapping, and identification can be performed for cases where a false alarm easily occurs, thereby improving identification accuracy and reducing the rate of false alarm.

• The second identification method

In step S111' of FIG. 11b, a large number of images may be acquired as a set of samples.

In step S112', the final fused image may be trained by using a deep learning method (for example, using the YOLO3 algorithm and employing a multi-layer RCNN network (region-based convolutional neural network)), such that weight values of different dangerous or contraband goods are obatined and a trained model is obtained.

In step S113', indentification may be performed based on the trained model, thereby significantly improving the ability to locate and identify a suspect item.

When there are multiple human images in the image, the human images are firstly divided into a plurality of individual human images, and then each of the individual human images is intelligently identified according to the above method.

Based on the idea of deep learning, the present application also provides a multi-modal material identification method. The implemention of the method is based on the following facts: waves of the same band may "differently sense" items of different materials, which may be embodied as different pixel values in terms of imaging result; waves of different bands may also "differently sense" items of the same material, which may be also embodied as different pixel values in terms of imaging result.

Infrared, visible light and terahertz/millimeter waves are at different bands, and may detect different properties. The ability for identifying material may be significantly improved by combining images of these three bands and using the multi-modal material identification method.

FIG. 12 illustrates a flowchart of a multi-modal material identification method in accordance with an embodiment of the present application.

The method comprises the following steps:

- in step S121, a plurality of conventional suspect items are classified (for example, into categories of gasoline alcohol, metal, powder, or more refined categories, etc.);
- in step S122, calibration blocks being of different thicknesses (for example, 1 cm, 3 cm, 5 cm, 8 cm, 10 cm, etc.) for materials of different categories are set;

- in step S123, the calibration blocks being of different thicknesses and different materials are imaged using the terahertz/millimeter wave imaging device in the same use scenario with a human as a reference, and the calibration blocks being of different thicknesses and different materials are imaged simultaneously using the visible light imaging device and the infrared imaging device, such that multi-dimensional calibration data is obtained;
- in step S124, the multi-dimensional calibration data is trained and fused using the depth learning algorithm to generate a multi-spectral material classifier.

Due to different conditions such as scene, illumination, temperature, etc., the generated multi-dimensional calibration data will be different, which will affect a result of the classifier. Therefore, the classifier is trained or self-learned online for possible conditions such as scene, temperature to be continuously updated, thereby improving the universality of the classifier.

- in step S125, the detected suspect item is intelligently identified by the classifier, and the material of the suspect item is accurately determined.

By combining the multi-modal material identification method with the multi-modal intelligent identification method described above may identify the material and category of the object to be inspected more accurately, thereby improving the accuracy of identification.

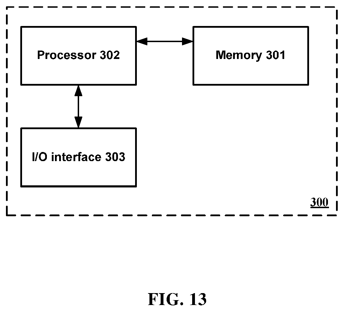

FIG. 13 illustrates a schematic diagram of a multi-modal image processing apparatus 300 in accordance with an embodiment of the present application.

As shown, the multi-modal image processing apparatus 300 may include a memory 301, a processor 302, and an input/output (I/O) interface 303.

The memory 302 may be configured to store various instructions which, when executed, cause the multi-modal fusion system 100 to perform various operations as described above, or cause the multi-modal identification system 200 to perform various operations as described above.

The processor 301 may be configured to, with or without use of one or more additional components, invoke at least one of the various instructions stored in the memory, and execute the at least one instruction to cuase the multi-modal fusion system 100 and the multi-modal identification system 200 to perform various functions.

The I/O interface 303 may be configured to receive data from outside of the multi-modal image processing apparatus and transmit data to the outside.

The various systems, apparatuses, modules, and units described above may be implemented by software, hardware, firmware, or a combination thereof. For example, it may be implemented by a computer program which comprises a set of instructions and is maintained in a computer readable medium. The set of instructions are codes for performing the above operations. The computer readable medium may include both computer storage medium and communication medium including any medium that facilitates communication of the computer program from one place to another. The computer storage medium may be any available medium that can be accessed by the computer. By way of example, such computer readable medium may comprise, but not limited to, RAM, ROM, EEPROM, CD-ROM or other optical disk storage, disk storage or other magnetic storage device, or may be any other medium that transfers or stores desired program codes in form of instruction or data structure and may be accessed by the computer. Moreover, any suitable connection may be sometimes termed as the computer-readable medium. For example, if coaxial cable, fiber optic cable, twisted pair, digital subscriber line (DSL), or wireless technology (for example, infrared, radio, and microwave) is used to transfer software from a website, server, or other remote source, then the coaxial cable, fiber optic cable, twisted pair, DSL, or wireless technology (eg, infrared, radio, and microwave) is included in the definition of the medium. The disks and discs used herein include compact discs (CDs), laser discs, optical discs, digital versatile discs (DVDs), floppy discs, and Blu-ray™ discs, wherein the discs magnetically reproduce data, while the discs also optically reproduce data through the laser. Thus, in some aspects, the computer readable medium may comprise persistent computer readable medium (e.g., tangible medium). Further, in some aspects, the computer readable medium may comprise transitory computer readable medium (e.g., a signal). Combinations of the above should also be included within the scope of computer readable medium.

Although specific embodiments have been described in detail above, the description is only for the purpose of illustration. Therefore, it should be understood that many of the above aspects are not intended to be necessary or essential elements, unless specifically stated otherwise. In addition to the above-described exemplary implementations, those skilled in the art having the benefit of the present disclosure may make various modifications and equivalent operations to the exemplary embodiments without departing from the scope of the disclosure as defined by the appended claims.

**Claims**

1. An image processing method implemented by an image processing apparatus, the method comprising:

obtaining (S21), by an image obtaining module of the image processing apparatus, a first image and at least two images, wherein the first image is imaged for an object in a first light/radiation band, and at least two images are imaged for the object in at least two light/radiation bands which are different from the first light/radiation band, and have the same scene as the first image;
performing (S23), by an image registration module of the image processing apparatus, image registration between the first image and the at least two images by using the first image as a reference image to obtain a registered first wave image and registered at least two images;
successively performing, by an image fusion module of the image processing apparatus, multi-level fusion (S25) on the registered first wave image and each of the registered at least two images by using at least one fusion method to obtain a multi-level fused image; and
identifying, by an image identification module of the image processing apparatus, an item carried on the object in the multi-level fused image;
wherein the first light/radiation band is a terahertz/millimeter wave band, the first image is a terahertz/millimeter wave image, and one of the at least two light/radiation bands is a visible light band, the other of the at least two light/radiation bands is an infrared light band, and the at least two images are visible light image and infrared image, respectively,
wherein successively performing, by an image fusion module of the image processing apparatus, multi-level fusion (S25) on the registered first wave image and each of the registered at least two images comprises:

performing (S91-S93) an image fusion on the registered infrared image (13B) and the registered terahertz/millimeter wave image (14A) by using a wavelet transformation model to obtain a fused image of first-level, which comprises information of a suspect item and a human contour; and
performing (S94) another image fusion on the fused image of first-level and the registered visible light image (13B) by using a HIS fusion model, so as to fuse color information in the registered visible light image into the fused image of first level to form the multi-level fused image.

2. The image processing method according to claim 1, further comprising:

performing (S22) image enhancement processing on the first image to obtain an enhanced first image, and
wherein the image registration and multi-level fusion are performed based on the enhanced first image.

3. The image processing method according to claim 1, further comprising:

filtering out (S24) background noises in the first image using a background noise filtering method to obtain a filtered first image, and
wherein the multi-level fusion is performed based on the filtered first image.

4. The image processing method according to claim 3, wherein the background noise filtering method detects portions within a maximum circumscribed rectangle of the object.

5. The image processing method according to claim 3, wherein the background noise filtering method detects portions within a contour of the object.

6. The image processing method of claim 1, wherein the step of performing image registration further comprises: performing image registration based on registration parameters.

7. The image processing method according to claim 6, wherein the registration parameters are variable and an average of the registration parameters during a period of registration is calculated when the registration parameters change during the period of registration, and wherein the average is used as a new registration parameter for the next registration.

8. The image processing method according to claim 1, further comprising:

acquiring (S111) a large number of images as a set of samples;
training (S112') the multi-level fusion using a deep learning method to obtain weight values of different dangerous or contraband goods; and
obtaining a trained model.

9. The image processing method according to claim 1, further comprising:
identifying (S125) material of the item carried by the object using a multi-spectral material classifier.

10. The image processing method according to claim 9, wherein the multi-spectral material classifier is obtained by:

imaging known contraband goods being of different types and different thicknesses in the first band and the at least two light/radiation bands to obtain multi-dimensional calibration data; and training the multi-dimensional calibration data to obtain the multi-spectral material classifier.

11. An image processing apparatus, comprising:

an image obtaining module configured to obtain a first image and at least two images, wherein the first image is imaged for an object in a first light/radiation band, and the at least two images are imaged for the object in at least two light/radiation bands which are different from the first light/radiation band, and have the same scene as the first image;
an image registration module (107) configured to perform image registration between the first image and the at least two images by using the first image as a reference image to obtain a registered first wave image and registered at least two images;
an image fusion module (109) configured to successively perform multi-level fusion on the registered first wave image and each of the registered at least two images by using at least one fusion method to obtain a multi-level fused image; and
an image identification module configured to identify an item carried on the object in the multi-level fused image;
wherein the first light/radiation band is a terahertz/millimeter wave band, the first image is a terahertz/millimeter wave image, and one of the at least two light/radiation bands is a visible light band, the other of the at least two light/radiation bands is an infrared light band, and the at least two images are visible light image and infrared image, respectively,
wherein the image fusion module (109) is further configured to:

perform an image fusion on the registered infrared image (13B) and the registered terahertz/millimeter wave image (14A) by using a wavelet transformation model to obtain a fused image of first-level, which comprises information of a suspect item and a human contour; and
perform another image fusion on the fused image of first-level and the registered visible light image (13B) by using a HIS fusion model, so as to fuse color information in the registered visible light image into the fused image of first level to form the multi-level fused image.

12. An image processing apparatus, comprising:

a processor configured to perform the image processing method according to any one of claims 1-10; a memory configured to store instructions which, when executed on the processor, cause the processor to perform the image processing method according to any one of claims 1-10; and an input/output interface configured to transmit data to outside of the image processing apparatus and receive data from the outside.

13. A non-transitory computer-readable medium storing instructions which, when executed, cause a computing device to perform the method according to any one of claims 1-10.

**Patentansprüche**

1. Bildverarbeitungsverfahren, implementiert durch eine Bildverarbeitungsvorrichtung wird, das Verfahren umfassend:

Erlangen (S21), durch ein Bilderlangungsmodul, eines ersten Bilds und mindestens zwei Bilder, wobei das erste Bild für ein Objekt in einem ersten Licht-/Strahlungsband abgebildet wird und mindestens zwei Bilder für das Objekt in mindestens zwei Licht-/Strahlungsbändern abgebildet werden, die sich von dem ersten Licht-/Strahlungsband unterscheiden und die gleiche Szene wie das erste Bild aufweisen; Durchführen (S23), durch ein Bildregistrierungsmodul der Bildverarbeitungsvorrichtung, einer Bildregistrierung zwischen dem ersten Bild und den mindestens zwei Bildern unter Verwendung des ersten Bilds als ein Referenzbild, um ein registriertes erstes Wellenbild und registrierte mindestens zwei Bilder zu erlangen; sukzessives Durchführen, durch ein Bildfusionsmodul der Bildverarbeitungsvorrichtung, einer mehrstufigen Fusion (S25) an dem registrierten ersten Wellenbild und jedem von den registrierten mindestens zwei Bildern unter Verwendung mindestens eines Fusionsverfahrens, um ein mehrstufiges Fusionsbild zu erlangen; und Identifizieren, durch ein Bildidentifizierungsmodul der Bildverarbeitungsvorrichtung, eines auf dem Objekt getragenen Gegenstandes in dem fusionierten mehrstufigen Bild; wobei das erste Licht-/Strahlungsband ein Terahertz-/Millimeterwellenband ist, das erste Bild ein Terahertz-/Millimeterwellenbild ist und eines der mindestens zwei Licht-/Strahlungsbänder ein sichtbares Lichtband ist, das andere der mindestens zwei Licht-/Strahlungsbänder ein Infrarotlichtband ist und die mindestens zwei Bilder jeweils ein sichtbares Lichtbild und ein Infrarotbild sind, wobei ein sukzessives Durchführen einer mehrstufigen Fusion (S25) an dem registrierten ersten Wellenbild und jedem von den mindestens zwei registrierten Bildern durch ein Bildfusionsmodul der Bildverarbeitungsvorrichtung Folgendes umfasst:

Durchführen (S91-S93) einer Bildfusion an dem registrierten Infrarotbild (13B) und dem registrierten Terahertz-/Millimeterwellenbild (14A) unter Verwendung eines Wavelet-Transformationsmodells, um ein fusioniertes Bild der ersten Ebene zu erlangen, das Informationen über einen verdächtigen Gegenstand und eine menschliche Kontur umfasst; und Durchführen (S94) einer weiteren Bildfusion an dem fusionierten Bild der ersten Ebene und dem registrierten Bild mit sichtbarem Licht (13B) unter Verwendung eines HIS-Fusionsmodells, um Farbinformationen in dem registrierten Bild mit sichtbarem Licht in das fusionierte Bild der ersten Ebene zu fusionieren, um das mehrstufige fusionierte Bild zu bilden.

2. Bildverarbeitungsverfahren nach Anspruch 1, ferner umfassend: Durchführen (S22) von Bildverbesserungsverarbeitung an dem ersten Bild, um ein verbessertes erstes Bild zu erlangen, und wobei die Bildregistrierung und die mehrstufige Fusion basierend auf dem verbesserten ersten Bild durchgeführt werden.

3. Bildverarbeitungsverfahren nach Anspruch 1, ferner umfassend:

Herausfiltern (S24) von Hintergrundrauschen in dem ersten Bild unter Verwendung eines Hintergrundrauschen-Filterungsverfahrens, um ein gefiltertes erstes Bild zu erlangen, und wobei die mehrstufige Fusion basierend auf dem gefilterten ersten Bild durchgeführt wird.

4. Bildverarbeitungsverfahren nach Anspruch 3, wobei das Hintergrundrauschen-Filterungsverfahren Abschnitte innerhalb eines maximal umschriebenen Rechtecks des Objekts erkennt.

5. Bildverarbeitungsverfahren nach Anspruch 3, wobei das Hintergrundrauschen-Filterungsverfahren Abschnitte innerhalb einer Kontur des Objekts erkennt.

6. Bildverarbeitungsverfahren nach Anspruch 1, wobei der Schritt eines Durchführens von Bildregistrierung ferner Folgendes umfasst:
Durchführen von Bildregistrierung basierend auf Registrierungsparametern.

7. Bildverarbeitungsverfahren nach Anspruch 6, wobei die Registrierungsparameter variabel sind und ein Durchschnitt der Registrierungsparameter während einer Registrierungsperiode berechnet wird, wenn sich die Registrierungsparameter während der Registrierungsperiode ändern, und wobei der Durchschnitt als ein neuer Registrierungsparameter für die nächste Registrierung verwendet wird.

8. Bildverarbeitungsverfahren nach Anspruch 1, ferner umfassend:

   Erfassen (S111') einer großen Anzahl von Bildern als eine Reihe von Stichproben;
   Trainieren (S112') der mehrstufigen Fusion unter Verwendung eines Deep-Learning-Verfahrens, um Gewichtungswerte verschiedener gefährlicher oder geschmuggelter Waren zu erlangen; und
   Erlangen eines trainierten Modells.

9. Bildverarbeitungsverfahren nach Anspruch 1, ferner umfassend:
Identifizieren (S125) des Materials des von dem Objekt getragenen Gegenstands unter Verwendung eines multispektralen Materialklassifikators.

10. Bildverarbeitungsverfahren nach Anspruch 9, wobei der multispektrale Materialklassifikator durch Folgendes erlangt wird:

    Abbilden bekannter Schmuggelware unterschiedlicher Art und unterschiedlicher Stärke in dem ersten Band und den mindestens zwei Licht-/Strahlungsbändern, um mehrdimensionale Kalibrierungsdaten zu erlangen; und
    Trainieren der mehrdimensionalen Kalibrierungsdaten, um den multispektralen Materialklassifikator zu erlangen.

11. Bildverarbeitungsvorrichtung, umfassend:

    ein Bilderlangungsmodul, das konfiguriert ist, um ein erstes Bild und mindestens zwei Bilder zu erlangen, wobei das erste Bild für ein Objekt in einem ersten Licht-/Strahlungsband abgebildet wird, und die mindestens zwei Bilder für das Objekt in mindestens zwei Licht-/Strahlungsbändern abgebildet werden, die sich von dem ersten Licht-/Strahlungsband unterscheiden und die gleiche Szene wie das erste Bild aufweisen;
ein Bildregistrierungsmodul (107), das konfiguriert ist, um Bildregistrierung zwischen dem ersten Bild und den mindestens zwei Bildern unter Verwendung des ersten Bilds als ein Referenzbild durchzuführen, um ein registriertes erstes Wellenbild und registrierte mindestens zwei Bilder zu erlangen;
ein Bildfusionsmodul (109), das konfiguriert ist, um sukzessive mehrstufige Fusion an dem registrierten ersten Wellenbild und jedem von den registrierten mindestens zwei Bildern unter Verwendung mindestens eines Fusionsverfahrens durchzuführen, um ein mehrstufiges Fusionsbild zu erlangen; und
ein Bildidentifizierungsmodul, das konfiguriert ist, um einen auf dem Objekt getragenen Gegenstand in dem fusionierten Bild mit mehreren Ebenen zu identifizieren;
wobei das erste Licht-/Strahlungsband ein Terahertz-/Millimeterwellenband ist, das erste Bild ein Terahertz-/Millimeterwellenbild ist und eines der mindestens zwei Licht-/Strahlungsbänder ein sichtbares Lichtband ist, das andere der mindestens zwei Licht-/Strahlungsbänder ein Infrarotlichtband ist und die mindestens zwei Bilder jeweils ein sichtbares Lichtbild und ein Infrarotbild sind,
wobei das Bildfusionsmodul (109) ferner zu Folgendem konfiguriert ist:

   Durchführen einer Bildfusion an dem registrierten Infrarotbild (13B) und dem registrierten Terahertz-/Millimeterwellenbild (14A) unter Verwendung eines Wavelet-Transformationsmodells, um ein fusioniertes Bild der ersten Ebene zu erlangen, das Informationen über einen verdächtigen Gegenstand und eine menschliche Kontur umfasst; und
   Durchführen einer weiteren Bildfusion an dem fusionierten Bild der ersten Ebene und dem registrierten Bild mit sichtbarem Licht (13B) unter Verwendung eines HIS-Fusionsmodells, um Farbinformationen in dem registrierten Bild mit sichtbarem Licht in das fusionierte Bild der ersten Ebene zu fusionieren, um das mehrstufige fusionierte Bild zu bilden.

12. Bildverarbeitungsvorrichtung, umfassend:

    einen Prozessor, der konfiguriert ist, um das Bildverarbeitungsverfahren nach einem der Ansprüche 1-10 durchzuführen;
    einen Speicher, der konfiguriert ist, um Anweisungen zu speichern, die, wenn sie auf dem Prozessor ausgeführt werden, den Prozessor veranlassen, das Bildverarbeitungsverfahren nach einem der Ansprüche 1-10 durchzuführen; und

eine Ein-/Ausgabeschnittstelle, die konfiguriert ist, um Daten nach außerhalb der Bildverarbeitungsvorrichtung zu übertragen und Daten von außerhalb zu empfangen.

13. Nicht-transitorisches computerlesbares Medium, das Anweisungen speichert, die, wenn sie ausgeführt werden, eine Rechenvorrichtung veranlassen, das Verfahren nach einem der Ansprüche 1-10 durchzuführen.

## Revendications

1. Procédé de traitement d'images mis en œuvre par un appareil de traitement d'images, le procédé comprenant :

l'obtention (S21), par un module d'obtention d'images de l'appareil de traitement d'images, d'une première image et d'au moins deux images, dans lequel la première image est prise pour un objet sur une première bande de lumière/de rayonnement, et au moins deux images sont prises pour l'objet sur au moins deux bandes de lumière/de rayonnement qui sont différentes de la bande de lumière/de rayonnement, et présentent la même scène que la première image ;

la réalisation (S23), par un module de superposition d'images de l'appareil de traitement d'images, d'une superposition d'images entre la première image et les au moins deux images en utilisant la première image comme une image de référence afin d'obtenir une première image à ondes superposée et au moins deux images superposées ;

la réalisation successive, par un module de fusion d'images de l'appareil de traitement d'images, d'une fusion multiniveau (S25) sur la première image à ondes superposée et chacune des au moins deux images superposées en utilisant au moins un procédé de fusion afin d'obtenir une image fusionnée multiniveau ; et

l'identification, par un module d'identification d'images de l'appareil de traitement d'images, d'un élément porté sur l'objet sur l'image fusionnée multiniveau ;

dans lequel la première bande de lumière/de rayonnement est une bande d'ondes térahertz/-millimétriques, la première image est une image à ondes térahertz/millimétriques, et l'une des au moins deux bandes de lumière/de rayonnement est une bande de lumière visible, l'autre des au moins deux bandes de lumière/de rayonnement est une bande de lumière infrarouge, et les au moins deux images sont une image à lumière visible et une image infrarouge, respectivement, dans lequel la réalisation successive, par un module de fusion d'images de l'appareil de traitement d'images, d'une fusion multiniveau (S25) sur la première image à ondes superposée et chacune des au moins deux images superposées comprend :

la réalisation (S91-S93) d'une fusion d'images sur l'image infrarouge superposée (13B) et l'image à ondes térahertz/millimétriques superposée (14A) à l'aide d'un modèle de transformation en ondelettes afin d'obtenir une image fusionnée de premier niveau, qui comprend des informations d'un élément suspect et une silhouette humaine ; et

la réalisation (S94) d'une autre fusion d'images sur l'image fusionnée de premier niveau et l'image à lumière visible superposée (13B) à l'aide d'un modèle de fusion HIS, de façon à fusionner les informations de couleur sur l'image à lumière visible superposée avec l'image fusionnée de premier niveau afin de former l'image fusionnée multiniveau.

2. Procédé de traitement d'images selon la revendication 1, comprenant en outre :

la réalisation (S22) d'un traitement d'amélioration d'image sur la première image afin d'obtenir une première image améliorée, et dans lequel la superposition d'images et la fusion multiniveau sont effectuées sur la base de la première image améliorée.

3. Procédé de traitement d'images selon la revendication 1, comprenant en outre :

le filtrage (S24) des bruits de fond sur la première image à l'aide d'un procédé de filtrage de bruit de fond afin d'obtenir une première image filtrée, et dans lequel la fusion multiniveau est effectuée sur la base de la première image filtrée.

4. Procédé de traitement d'images selon la revendication 3, dans lequel le procédé de filtrage de bruit de fond détecte des parties dans un rectangle limité maximal de l'objet.

5. Procédé de traitement d'images selon la revendication 3, dans lequel le procédé de filtrage de bruit de fond détecte des parties dans un contour de l'objet.

6. Procédé de traitement d'images selon la revendication 1, dans lequel l'étape de réalisation d'une superposition d'images comprend en outre : la réalisation d'une superposition d'images sur la base de paramètres de superposition.

7. Procédé de traitement d'images selon la revendication 6, dans lequel les paramètres de superposition sont variables et une moyenne des paramètres de superposition pendant une période de superposition est calculée lorsque les paramètres de superposition changent pendant la période de superposition, et dans lequel la moyenne est utilisée comme un nouveau paramètre de superposition pour la superposition suivante.

8. Procédé de traitement d'images selon la revendication 1, comprenant en outre :

   l'acquisition (S111') d'un grand nombre d'images en guise de groupe d'échantillons ;
   l'entraînement (S112') de la fusion multiniveau à l'aide d'un procédé d'apprentissage en profondeur afin d'obtenir des valeurs de poids de différents biens dangereux ou de contrebande ; et
   l'obtention d'un modèle entraîné.

9. Procédé de traitement d'images selon la revendication 1, comprenant en outre :
   l'identification (S125) du matériau de l'élément porté par l'objet à l'aide d'une classification de matériaux multispectrale.

10. Procédé de traitement d'images selon la revendication 9, dans lequel la classification de matériaux multispectrale est obtenue en :

    prenant des images de biens de contrebande connus de différents types et de différentes épaisseurs sur la première bande et les au moins deux bandes de lumière/de rayonnement afin d'obtenir des données de calibrage multidimensionnelles ; et
    entraînant les données de calibrage multidimensionnelles afin d'obtenir la classification de matériaux multispectrale.

11. Appareil de traitement d'images, comprenant :

    un module d'obtention d'images configuré pour obtenir une première image et au moins deux images, dans lequel la première image est prise pour un objet sur une première bande de lumière/de rayonnement, et les au moins deux images sont prises pour l'objet sur au moins deux bandes de lumière/de rayonnement qui sont différentes de la première bande de lumière/de rayonnement, et présentent la même scène que la première image ;
    un module de superposition d'images (107) configuré pour effectuer une superposition d'images entre la première image et les au moins deux images en utilisant la première image comme une image de référence afin d'obtenir une première image à ondes superposée et au moins deux images superposées ;
    un module de fusion d'images (109) configuré pour effectuer successivement une fusion multiniveau sur la première image à ondes superposée et chacune des au moins deux images superposées à l'aide d'au moins un procédé de fusion afin d'obtenir une image fusionnée multiniveau ; et
    un module d'identification d'images configuré pour identifier un élément porté sur l'objet sur l'image fusionnée multiniveau ;
    dans lequel la première bande de lumière/de rayonnement est une bande d'ondes térahertz/millimétriques, la première image est une image à ondes térahertz/millimétriques, et l'une des au moins deux bandes de lumière/de rayonnement est une bande de lumière visible, l'autre des au moins deux bandes de lumière/de rayonnement est une bande de lumière infrarouge, et les au moins deux images sont une image à lumière visible et une image infrarouge, respectivement, dans lequel le module de fusion d'images (109) est en outre configuré pour :

    effectuer une fusion d'images sur l'image infrarouge superposée (13B) et l'image à ondes térahertz/millimétriques superposée (14A) à l'aide d'un modèle de transformation en ondelettes afin d'obtenir une image fusionnée de premier niveau, qui comprend des informations d'un élément suspect et une silhouette humaine ; et
    effectuer une autre fusion d'images sur l'image fusionnée de premier niveau et l'image à lumière visible superposée (13B) à l'aide d'un modèle de fusion HIS, de façon à fusionner les informations de couleur sur l'image à lumière visible superposée avec l'image fusionnée de premier niveau afin de former l'image fusionnée multiniveau.

12. Appareil de traitement d'images, comprenant :

    un processeur configuré pour exécuter le procédé de traitement d'images selon l'une quelconque des revendications 1 à 10 ;
    une mémoire configurée pour stocker des instructions qui, lorsqu'elles sont exécutées sur le processeur, permettent au processeur d'exécuter le procédé de traitement d'images selon l'une quelconque des revendications 1 à 10 ; et une interface d'entrée/de sortie configurée pour transmettre des données vers l'extérieur de l'appareil de traitement d'images et recevoir des données en provenance de l'extérieur.

13. Support non transitoire lisible par un ordinateur qui stocke des instructions qui, lorsqu'elles sont exécutées, permettent à un dispositif informatique d'exécuter le procédé selon l'une quelconque des revendications 1 à 10.

**FIG. 1**

```
         ┌─────────┐
         │  start  │
         └────┬────┘
              │
              ▼
┌──────────────────────────────────────┐
│   imaging by imaging devices, thereby │ ── S21
│ obtaining a terahertz/millimeter wave │
│   image, a visible light image, and   │
│          an infrared image            │
└──────────────────┬───────────────────┘
                   │
                   ▼
       ┌────────────────────────┐
       │ processing for enhancing│ ── S22
       │  visual effect of the   │
       │         images          │
       └───────────┬─────────────┘
                   │
                   ▼
       ┌────────────────────────┐
       │   image registeration  │ ── S23
       └───────────┬─────────────┘
                   │
                   ▼
       ┌────────────────────────┐
       │ background noise filtering│ ── S24
       └───────────┬─────────────┘
                   │
                   ▼
       ┌────────────────────────┐
       │   multi-modal fusion   │ ── S25
       └───────────┬─────────────┘
                   │
                   ▼
             ┌─────────┐
             │   end   │
             └─────────┘
```

**FIG. 2**

11A、10B、10C ---→ | determining unit 210 | 10B、10C → | color image to grayscale image conversion unit 220 |

11B、11C ↓

11A → | algorithm registration unit 230 |

12B、12C ↓

| grayscale image to color image conversion unit 240 |

13B、13C

12A

107

**FIG. 3**

start

detecting images from
multiple devices — S41

human image
is detected? — S42        no

yes

converting into grayscale
images — S43

performing feature detection and
extracting correspondances
between the features — S44

performing image registeration
based on the extracted
correspondances — S45

converting the registered visible
light image and infrared image into
color images — S46

end

**FIG. 4**

**FIG. 5**

**FIG. 6a**

**FIG. 6b**

start

obtaining the mask — S71

Performing logical operation — S72

end

**FIG. 7**

start

median filtering — S81

bilateral filtering — S82

linear stretch — S83

applying HOG algorithm — S84

end

**FIG. 8**

start

performing wavelet-decomposition on the terahertz/millimeter wave image and infrared image to obtain a plurality of subdivided components — S91

fusing the respective components in terms of the wavelet coefficients based on a fusion rule — S92

performing wavelet reconstruction on each of the fused components to obtain a fused image of first-level — S93

performing a second-level fusion on the fused image of first-level and the visible light image 13B using HIS algorithm — S94

end

**FIG. 9**

multi-modal fusion system 100 — 15 → multi-modal intelligent identification module 201

multi-modal identification system 200

**FIG. 10**

start

identifying a region having smaller grayscale values in the fused image — S111

determining the position of a feature — S112

calculating a distance and a length — S113

the distance is less than a first threshold and the length is greater than a second threshold? — S114

no

yes

regarding the region having smaller grayscale values as a belt — S115

regarding the region having smaller grayscale values as contraband goods — S116

FIG. 11a

start

obtaining image samples — S111'

obtaining a trained model using a deep learning method — S112'

performing indentification based on the trained model — S113'

FIG. 11b

start

classfying the suspect items — S121

Setting calibration blocks of different thicknesses — S122

obtaining multi-dimensional calibration data — S123

generating and continuously training a multi-spectral material classifier — S124

performing material identification using the classifier — S125

FIG. 12

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. MAY**. *Safe Visitor: Visible, Infrared and Terahertz Object recognition for security screening application*